(19) Europäisches Patentamt
European Patent Office
Office européen des brevets

(11) **EP 2 690 812 B1**

(12) **EUROPEAN PATENT SPECIFICATION**

(45) Date of publication and mention
of the grant of the patent:
**24.02.2016 Bulletin 2016/08**

(51) Int Cl.:
*H04J 14/02* (2006.01)          *H04B 10/556* (2013.01)
*H04B 10/69* (2013.01)          *H04L 25/02* (2006.01)

(21) Application number: **12177863.3**

(22) Date of filing: **25.07.2012**

(54) **Method and device for performing channel estimation and equalization for an optical OFDM signal**

Verfahren und Vorrichtung zum Durchführen der Kanaleinschätzung und Ausgleichen für ein optisches OFDM-Signal

Procédé et dispositif pour réaliser l'évaluation et l'égalisation de canal d'un signal OFDM optique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**29.01.2014 Bulletin 2014/05**

(73) Proprietors:
• **Mitsubishi Electric R&D Centre Europe B.V.**
 **1119 NS Schiphol Rijk (NL)**
 Designated Contracting States:
 **FR**
• **Mitsubishi Electric Corporation**
 **Chiyoda-ku**
 **Tokyo 100-8310 (JP)**
 Designated Contracting States:
 **AL AT BE BG CH CY CZ DE DK EE ES FI GB GR HR HU IE IS IT LI LT LU LV MC MK MT NL NO PL PT RO RS SE SI SK SM TR**

(72) Inventors:
• **Froc, Gwillerm**
 **35708 RENNES Cedex 7 (FR)**
• **Weppe, Olivier**
 **35708 RENNES Cedex 7 (FR)**

(74) Representative: **Maillet, Alain**
 **Cabinet Le Guen Maillet**
 **5, place Newquay**
 **B.P. 70250**
 **35802 Dinard Cedex (FR)**

(56) References cited:
**WO-A2-2010/149714     US-A1- 2009 297 144
US-A1- 2011 310 951     US-A1- 2012 027 419
US-B1- 7 693 429**

**Description**

The present invention generally relates to performing channel estimation and equalization in an orthogonal frequency-division multiplex optical communication.

Optical communications from an optical transmitter to an optical receiver may rely on Orthogonal Frequency Division Multiplex (OFDM) electrical encoding / decoding. A plurality of subcarriers are used to transmit data from the optical transmitter to the optical receiver via a transmission channel.

Typically, the optical transmitter transmits training sequences on a regular basis. The optical receiver is aware of what optical signal is expected to be received when such training sequences are transmitted by the optical transmitter. During one symbol period, for instance every fifty symbols, the optical transmitter transmits a training sequence on each subcarrier of said plurality of subcarriers. When receiving the training sequence via said subcarriers, the optical receiver performs an estimation, called channel estimation, of the transmission channel. In other words, the optical receiver determines coefficients representative of the transmission channel thanks to the training sequence received via all the subcarriers and uses these coefficients in order to perform equalization, *i.e.* in order to compensate the signal distortion introduced by the transmission channel.

However, such channel estimation is extremely resource consuming. When implemented in hardware, such as in an FPGA (*Field-Programmable Gate Array*) or an ASIC (*Application-Specific Integrated Circuit*), channel estimation is extremely costly in terms of multipliers, or in terms of multipliers and logical cells. It means in turn that very high data rate optical receiver can difficulty be designed and developed on the basis of a single cost-effective integrated circuit. This is particularly the case for dual-polarisation transmission channel, i.e. 2x2 Multiple Input / Multiple Output transmission channel. This is moreover particularly the case for data rates greater than 10 Gbps or even 100 Gbps. Indeed, such data rates imply fast-running circuits or processes with a large amount of processing resources used in parallel.

The patent application document US 2009/297144 A1 deals with optical receivers adapted for polarization mode dispersion compensation in multi-level coded-modulation schemes using a BLAST (Bell Laboratories Layered Space-Time) architecture relying on an OFDM detector adapted to output symbol estimates for input sequences. The receiver further includes low-density parity-check (LDPC) decoders adapted to receive channel bit reliabilities, indirectly calculated from the symbol estimates, and to output code words. The LDPC decoders iteratively provide extrinsic soft information feedback to the OFDM detector to compensate for polarization interference. A further prior art system is known from WO 2010/149714.

It is desirable to overcome the aforementioned problems.

In particular, it is desirable to provide a solution that allows reducing the amount of processing resources necessary in parallel for an optical receiver adapted for receiving an orthogonal frequency-division multiplex optical signal via a plurality of subcarriers.

It is more particularly desirable to provide a solution that allows reducing the quantity of multipliers, or of multipliers and logic cells used in parallel, when channel estimation operations are implemented in hardware.

It is also desirable to provide a solution that allows increasing the useful bandwidth of a transmission channel between an optical transmitter and an optical receiver, the optical transmitter transmitting orthogonal frequency-division multiplex optical signal via a plurality of subcarriers to the optical receiver via the transmission channel.

To that end, the present invention concerns an optical receiver adapted for receiving via a transmission channel an orthogonal frequency-division multiplex optical signal via a plurality of subcarriers, the optical receiver comprising means for performing channel estimation and means for performing equalization on the basis of coefficients representative of the transmission channel, said coefficients being provided by said means for performing channel estimation. The optical receiver is such that said means for performing channel estimation comprise: means for processing a training sequence received via a first subset among said plurality of subcarriers; and means for interpolating coefficients, the interpolated coefficients corresponding to subcarriers not processed by said means for processing the training sequence.

Thus, compared to an optical receiver processing the whole set of subcarriers of said plurality, the interpolation allows reducing the amount of processing resources necessary for an optical receiver to perform channel estimation and equalization. Considering that N is the total quantity of subcarriers and that Na is the cardinality of said first subset of subcarriers, the amount of necessary resources is reduced by a ratio that at least equals N/Na.

According to a particular feature, said means for processing the training sequence are adapted to process in parallel the subcarriers of said first subset.

Thus, the optical receiver can rapidly perform channel estimation and equalization once the training sequence is received.

According to a particular feature, said means for processing the training sequence are adapted to process in parallel a quantity of subcarriers lower than the cardinality of said first subset and said means for performing channel estimation comprise: means for determining a second subset of subcarriers among said first subset of subcarriers, the cardinality of said second subset being at most equal to the quantity of subcarriers that said means for processing the training sequence are adapted to process in parallel; means for processing the training sequence received via said second subset; means for selecting, in a circular way, at least one other second subset of subcarriers among said first subset and for repeating processing the training sequence with said at least one other second subset.

Thus, when the transmission channel is not as frequency-selective as it would be on copper or over the air, and/or when the frequency-selective character of the transmission channel varies slowly as OFDM symbols get through, the processing resources necessary for an optical receiver to perform channel estimation and equalization are further reduced.

According to a particular feature, said optical signal being a dual-polarisation optical signal, the optical receiver comprises means for configuring an optical transmitter transmitting said dual-polarisation optical signal so that the optical transmitter transmits the same signal, on both polarisations, on subcarriers for which said coefficients have not been interpolated and for which said training sequence has not been processed.

Some second subsets of subcarriers are processed sequentially, which means that some subcarriers at a given time during initialisation of the transmission are neither processed via channel estimation nor via interpolation. Thus, in order to compensate this fact, the transmission is rendered more robust by transmitting the same signal on both polarization for these subcarriers.

According to a particular feature, the optical receiver is adapted to receive training sequences over time and said means for performing channel estimation further comprise means for selecting, from one training sequence to another, another first subset among said plurality of subcarriers.

Thus, diversity is provided regarding the subcarriers for which channel estimation is performed and regarding the subcarriers for which interpolation is performed. For instance, the optical receiver switches from one subset of subcarriers to another synchronously with an optical transmitter transmitting the considered optical signal.

According to a particular feature, the optical receiver is adapted so that after a predefined quantity of received training sequences, said means for processing the training sequence have processed all subcarriers among said plurality of subcarriers.

Thus, channel estimation and equalization are enhanced.

According to a particular feature, said optical signal being a mono-polarisation optical signal, said means for performing channel estimation comprise means for determining said first subset on the basis of a partial derivative, with respect to wavelength, of an inverse of a scalar representative of the transmission channel.

Thus, determining the first subset of subcarriers focuses on parts of the spectrum where the mono-polarization transmission channel varies the most.

According to a particular feature, said optical signal being a dual-polarisation optical signal, said means for performing channel estimation comprise means for determining said first subset on the basis of an Euclidian distance between partial derivatives, with respect to wavelength, of coefficients of an inverse of a matrix representative of the transmission channel.

Thus, determining the first subset of subcarriers focuses on parts of the spectrum where the dual-polarization transmission channel varies the most.

Thus, determining the first subset of subcarriers focuses on parts of the spectrum where the transmission channel varies the most.

According to a particular feature, said means for determining said first subset are further adapted to take into account a time-fair queuing constraint on all subcarriers of said plurality.

Thus, although determining the first subset of subcarriers focuses on parts of the spectrum where the transmission channel varies the most, no part of the spectrum remains only interpolated.

According to a particular feature, the optical receiver comprises means for configuring an optical transmitter transmitting said optical signal so that the optical transmitter applies a coding scheme more robust for subcarriers for which said coefficients have been interpolated than for subcarriers processed by said means for processing the training sequence.

Thus, the transmission is more robust on subcarriers for which said coefficients have been interpolated.

According to a particular feature, the optical receiver comprises means for configuring an optical transmitter transmitting said optical signal so that the optical transmitter applies a more robust coding scheme until a predefined quantity of subcarriers has been processed by said means for processing the training sequence.

Thus, a potential weakness of the equalization due to interpolation is compensated by a more robust coding scheme until stabilization of the interpolation.

According to a particular feature, said optical signal being a dual-polarisation optical signal, the optical receiver comprises means for configuring an optical transmitter transmitting said dual-polarisation optical signal so that the optical transmitter transmits the same signal, on both polarisations, on subcarriers for which said coefficients have been interpolated and for which a confidence level in the interpolated coefficients is below a given threshold.

Thus, the transmission is more robust on the subcarriers for which said coefficients have been interpolated and for which the confidence level is low. For instance, during an initialisation phase of the optical transmission, such a mechanism is applied.

The present invention also concerns an optical transmitter adapted for transmitting via a transmission channel an orthogonal frequency-division multiplex optical signal via a plurality of subcarriers. The optical transmitter is further adapted for transmitting, during a symbol period, a training sequence on a subset of said plurality of subcarriers and data on the remaining subcarriers among said plurality of subcarriers.

Thus, the useful bandwidth of the transmission channel is increased, whereas the amount of processing resources necessary for an optical receiver to perform channel estimation and equalization is reduced.

The present invention also concerns a method performed by an optical receiver, comprising: receiving via a transmission channel an orthogonal frequency-division multiplex optical signal via a plurality of subcarriers; performing channel estimation; performing equalization on the basis of coefficients representative of the transmission channel, said coefficients resulting from said channel estimation. The method is such that performing channel estimation comprises: processing a training sequence received via a first subset among said plurality of subcarriers; and interpolating coefficients, the interpolated coefficients corresponding to subcarriers not processed during the step of processing the training sequence.

The present invention also concerns a method performed by an optical transmitter, comprising: transmitting via a transmission channel an orthogonal frequency-division multiplex optical signal via a plurality of subcarriers. The method is such that it further comprises: transmitting, during a symbol period, a training sequence on a subset of said plurality of subcarriers and data on the remaining subcarriers among said plurality of subcarriers.

The present invention also concerns a computer program that can be downloaded from a communication network and/or stored on a medium that can be read by a processor. This computer program comprises instructions for causing implementation of the aforementioned method, when said program is run by a processor. The present invention also concerns information storage means, storing a computer program comprising a set of instructions causing implementation of the aforementioned method, when the stored information is read from said information storage means and run by a processor.

Since the features and advantages related to the aforementioned methods and to the computer program are identical to those already mentioned with regard to the corresponding aforementioned optical receiver and optical transmitter, they are not repeated here.

The characteristics of the invention will emerge more clearly from a reading of the following description of an example of embodiment, said description being produced with reference to the accompanying drawings, among which:

Fig. 1 schematically represents an optical communication system;

Fig. 2 schematically represents an alternative architecture of an optical communication device of the optical communication system;

Fig. 3 schematically represents a first algorithm for performing channel estimation;

Fig. 4 schematically represents a partial derivative, with respect to wavelength, of an inverse of a scalar representing a transmission channel of the optical communication system as a function of wavelength;

Fig. 5 schematically represents an algorithm for determining a subset of Na subcarriers among N subcarriers;

Fig. 6 schematically represents an algorithm for configuring an optical transmitter;

Fig. 7 schematically represents a second algorithm for performing channel estimation.

It has to be noticed that, since wavelength and frequency are tied together through a direct inverse relationship, these two terms are indifferently used by the one skilled in the art, as they refer to the same concept.

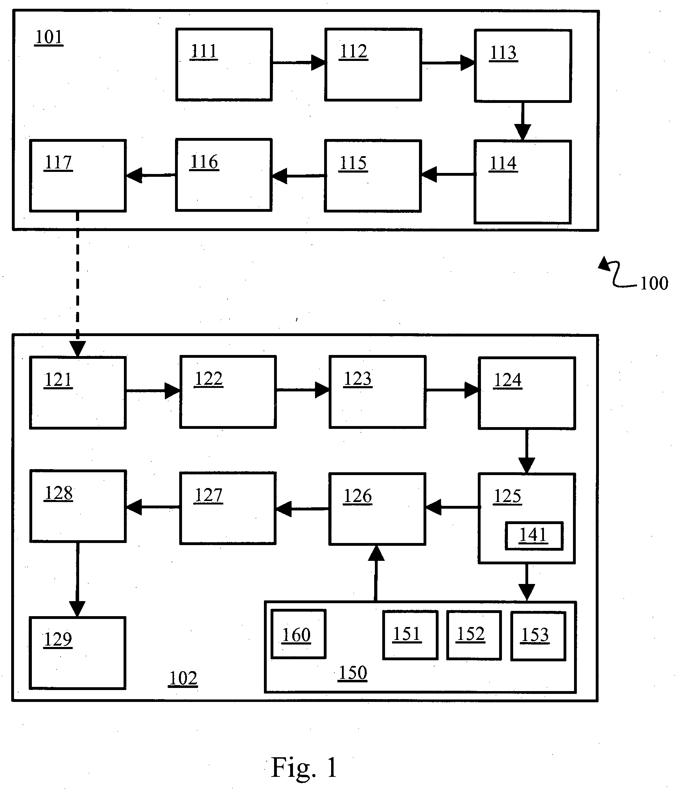

**Fig. 1** schematically represents an optical communication system 100 comprising an optical transmitter 101 and an optical receiver 102. The optical transmitter 101 is adapted to transmit optical signals to the optical receiver 102 using OFDM encoding.

The optical transmitter 101 comprises a data generator 111 providing data to be transmitted to the optical receiver 102. The optical transmitter 101 further comprises a serial-to-parallel converter 112 for parallelizing the data provided by the data generator 111. The optical transmitter 101 further comprises a modulating unit 113 for mapping the serialized data on N subcarriers. The optical transmitter 101 further comprises a training sequence inserting unit 114 for inserting training sequences in order to allow the optical receiver device 102 to perform channel estimation. Indeed, in order to be able to decode the signals received from the optical transmitter 101, the optical receiver needs to estimate the transmission channel between the optical transmitter 101 and the optical receiver 102. The optical transmitter 101 further comprises an IFFT (Inverse Fast Fourier Transform) unit 115 to which is input the output of the training sequence inserting unit 114. The optical transmitter 101 further comprises a parallel-to-serial converter 116 for serializing the data provided by the IFFT unit 115. The optical transmitter 101 further comprises a cyclic prefix inserting unit 117 for inserting cyclic prefixes in order to allow eliminating the inter-symbol interference. The optical transmitter 101 is adapted to generate optical signals on the basis of the output of the cyclic prefix inserting unit 117 and to transmit via optical fibre the generated optical signals toward the optical receiver 102. The optical transmitter 101 therefore comprises an electrical-to-optical signal conversion unit, not shown in Fig. 1 for the sake of simplicity.

According to one embodiment, the training sequence inserting unit 114 is adapted to insert over time, for instance on a regular basis such as every fifty symbols, a training sequence on the N subcarriers. In this case, as detailed hereafter, the optical receiver 102 only uses for performing the channel estimation a subset of Na subcarriers among the N subcarriers; wherein $2 \leq Na < N$.

According to another embodiment, as detailed hereafter, the training sequence inserting unit 114 is adapted to insert over time, for instance on a regular basis such as every fifty symbols, a training sequence on the subset of Na subcarriers among the N subcarriers, and the remaining subcarriers are used for transmitting other data, such as data provided by the data generator 111. The training sequence is, in this case, inserted at the subcarrier level. To achieve this, the optical transmitter 101 may rely on a predefined subset of Na subcarriers, for instance stored in a memory of the optical transmitter 101 during manufacturing process. In a variant, the training sequence inserting unit 114 comprises a scheduling unit 140 notifying the training sequence inserting unit 114 which subset of Na subcarriers to use.

According to yet another embodiment, when dual-polarisation is implemented for transmitting optical signals from the optical transmitter 101 to the optical receiver 102, the training sequence inserting unit 114 is adapted to insert a training sequence on the N subcarriers of one symbol for one polarisation and to insert the training sequence on the N subcarriers of another symbol for the other polarisation. The training sequence inserting unit 114 is adapted to insert over time, for instance on a regular basis such as every fifty symbols, the training sequence on each polarisation. When the training sequence is transmitted on one polarisation, no signal is transmitted on the other polarisation. This allows the optical receiver 102 to determine the interference generated by one polarisation on the other for each subcarrier, *i.e.* it allows the optical receiver 102 to determine the matrix H representative of the transmission channel between the optical transmitter 101 and the optical receiver 102 for each subcarrier. The matrix H can therefore be expressed as follows:

$$H = \begin{pmatrix} a_{11} & a_{21} \\ a_{12} & a_{22} \end{pmatrix}$$

wherein:

- $a_{11}$ represents a proportion of an optical signal received by the optical receiver 102 via the first polarisation when the optical signal is transmitted by the optical transmitter 101 via the first polarisation;
- $a_{12}$ represents a proportion of an optical signal received by the optical receiver 102 via the second polarisation when the optical signal is transmitted by the optical transmitter 101 via the first polarisation;
- $a_{21}$ represents a proportion of an optical signal received by the optical receiver 102 via the first polarisation when the optical signal is transmitted by the optical transmitter 101 via the second polarisation; and
- $a_{22}$ represents a proportion of an optical signal received by the optical receiver 102 via the second polarisation when the optical signal is transmitted by the optical transmitter 101 via the second polarisation.

According to yet another embodiment, when dual-polarisation is implemented for transmitting optical signals from the optical transmitter 101 to the optical receiver 102, the training sequence inserting unit 114 is adapted to insert a training sequence on the subset of Na subcarriers among the N subcarriers of one symbol for one polarisation and to insert the training sequence on the subset of Na subcarriers among the N subcarriers of another symbol for the other polarisation. The training sequence inserting unit 114 is adapted to insert over time, for instance on a regular basis such as every fifty symbols, the training sequence on each polarisation. When the training sequence is transmitted on one polarisation, no signal is transmitted on the other polarisation. To achieve this, the optical transmitter 101 may rely on a predefined subset of Na subcarriers. In a variant, the training sequence inserting unit 114 comprises the scheduling unit 140.

The optical receiver 102 is adapted to receive via optical fibre the optical signals transmitted by the optical transmitter 101. The optical receiver 102 therefore comprises an optical-to-electrical signal conversion unit, not shown in Fig. 1 for the sake of simplicity. The optical receiver 102 comprises a synchronization unit 121 for synchronizing the optical receiver 102 with the received optical signals. The optical receiver 102 further comprises a cyclic prefix removing unit 122 for removing the cyclic prefixes inserted by the cyclic prefix inserting unit 117 of the optical transmitter 101. The optical receiver 102 further comprises a serial-to-parallel converter 123 for parallelizing the data provided by the cyclic prefix removing unit 122. The optical receiver 102 further comprises an FFT (Fast Fourier Transform) unit 124 to which is input the parallelized data. The optical receiver 102 further comprises a training sequence removing unit 125 for removing the training sequences inserted by the training sequence inserting unit 114 of the optical transmitter 101. The optical receiver 102 further comprises a channel estimation unit 150 that is adapted to receive from the training sequence removing unit 125 the removed training sequences. The optical receiver 102 further comprises an equalizing unit 126 for reversing the distortion undergone by the optical signal through the transmission channel between the optical transmitter 101 and the optical receiver 102. The channel estimation unit 150 is adapted to perform an estimation of said transmission channel, and to provide coefficients representative of the transmission channel to the equalizing unit 126 accordingly. The optical receiver 102 further comprises a demodulating unit 127 for performing the inverse operation of that performed by the modulating unit 113 of the optical transmitter 101. The optical receiver 102 further comprises a parallel-to-serial converter 128 for serializing the data provided by the demodulating unit 127. The optical receiver 102 further comprises a data processor 129 for processing the serialized data, which should correspond to the data provided by the data generator 111 of the optical transmitter 111.

It has to be understood from the description hereinbefore that the OFDM processing is digitally performed.

As detailed hereafter, the training sequence removing unit 125 is adapted to remove over time, for instance on a regular basis such as every fifty symbols, a training sequence received on the aforementioned subset of Na subcarriers among the N subcarriers. To achieve this, the optical receiver 102 may rely on the aforementioned predefined subset of Na subcarriers, for instance stored in a memory of the optical receiver 102 during manufacturing process. In a variant, the training sequence removing unit 125 comprises a scheduling unit 141 notifying the training sequence removing unit 125 which subset of Na subcarriers to use.

The channel estimation unit 150 aims at determining coefficients representative of the transmission channel and at providing said coefficients to the equalizing unit 126. More particularly, when dual-polarisation is implemented for transmitting optical signals from the optical transmitter 101 to the optical receiver 102, the channel estimation unit 150 aims at determining the coefficients of the matrix H and at providing the coefficients of the inverse matrix $H^{-1}$ to the equalizing unit 126. By definition, said coefficients of the inverse matrix $H^{-1}$ are representative of the transmission channel. One may refer to the document "Long-haul transmission of 16x52.5 Gbps polarization-division-multiplexed OFDM enabled b y MIMO processing", S.L. Jansen, et al., 2008, J. Opt. Networking, Vol. 7, n° 2, pp.173-181.

The channel estimation unit 150 comprises a set of M channel estimation subunits 151, 152, 153, wherein $0 < M \leq Na$. The channel estimation subunits 151, 152, 153 are able to perform in parallel channel estimation for a set of M subcarriers on the basis of a training sequence transmitted on the Na subcarriers and provided by the training sequence removing unit 125.

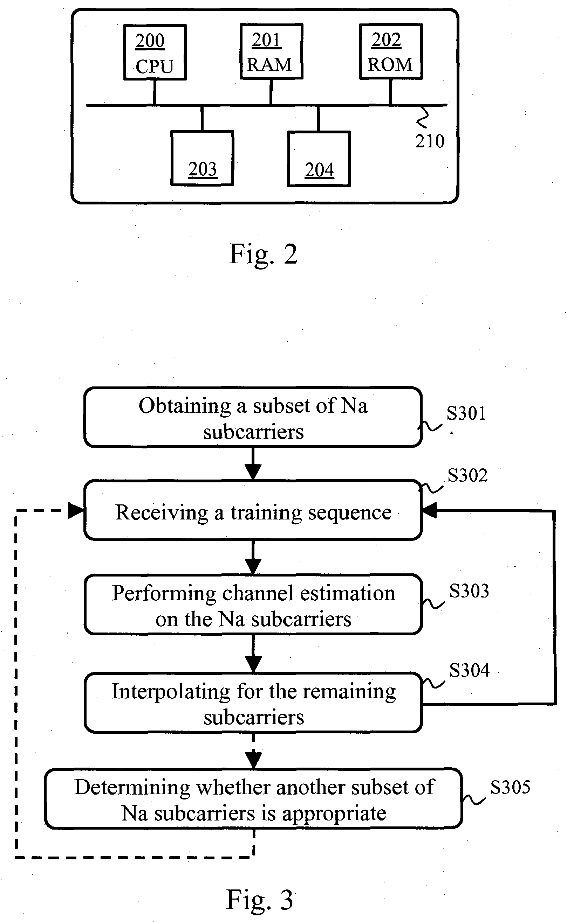

In case of a software implementation, as introduced hereafter with regard to Fig. 2, M represents the quantity of parallel processes that can be executed by the optical receiver 102 for performing channel estimation for a set of M subcarriers on the basis of a training sequence transmitted on the Na subcarriers.

The channel estimation unit 150 further comprises an interpolating unit 160 for interpolating coefficients representative of the transmission channel for subcarriers, among the N subcarriers, not processed by any channel estimation subunits 151, 152, 153.

The behaviour of the channel estimation unit 150 is detailed hereafter with regard to Fig. 3.

**Fig. 2** schematically represents an alternative architecture of an optical communication device of the optical communication system 100, *i.e.* the optical transmitter 101 and/or of the optical receiver 102.

According to the shown architecture, the optical communication device comprises the following components interconnected by a communications bus 210: a processor, microprocessor, microcontroller or CPU (*Central Processing Unit*) 200; a RAM (*Random-Access Memory*) 201; a ROM (*Read-Only Memory*) 202; an SD (*Secure Digital*) card reader 203, or any other device adapted to read information stored on storage means; an optical communication interface 204.

The optical communication interface 204 allows the communication device to exchange optical signals with the other communication device of the optical communication system 100.

Another communication interface may be present to provide a loopback link from the optical receiver 102 to the optical transmitter 101. Such a loopback link may correspond to a control plane in the context of a metropolitan or core network.

CPU 200 is capable of executing instructions loaded into RAM 201 from ROM 202 or from an external memory, such as an SD card. After the communication device has been powered on, CPU 200 is capable of reading instructions from RAM 201 and executing these instructions. The instructions form one computer program that causes CPU 200 to perform some or all of the steps of the algorithms described hereafter with regard to Figs. 3, 5, 5 and 7.

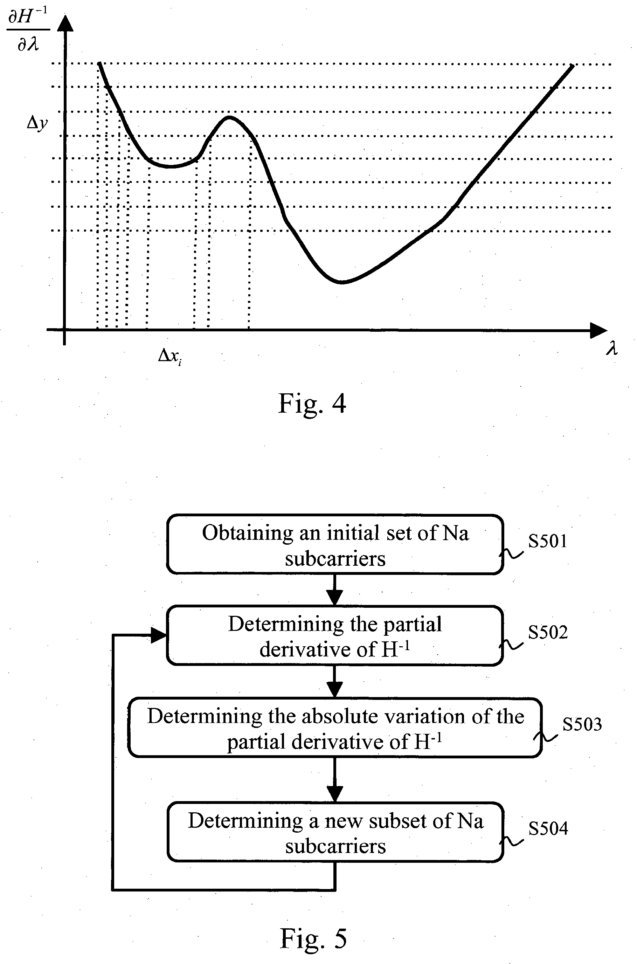

Any and all steps of the algorithms described hereafter with regard to Figs. 3, 5 6 and 7 may be implemented in software by execution of a set of instructions or program by a programmable computing machine, such as a PC (*Personal Computer*), a DSP (*Digital Signal Professor*) or a microcontroller; or else implemented in hardware by a machine or a dedicated component, such as an FPGA or an ASIC.

**Fig. 3** schematically represents a first algorithm performed by the optical receiver 102 for performing channel estimation. In the context of the optical communication system 100 shown in Fig. 1, this algorithm is performed by the channel estimation unit 150.

In a step S301, the optical receiver 102 obtains a subset of Na subcarriers among the N subcarriers defined in the OFDM optical transmission from the optical transmitter 101 to the optical receiver 102.

As already mentioned, the subset of Na subcarriers among the N subcarriers may be predefined, for instance stored in a memory of the optical receiver 102 during manufacturing process. Therefore the subset of Na subcarriers among the N subcarriers may be statically defined.

The subset of Na subcarriers among the N subcarriers may also be dynamically defined.

According to a first embodiment, the optical receiver 102 uses first a default subset of Na subcarriers, and uses later on another subset of Na subcarriers. For instance, the selection of successive subsets of Na subcarriers is performed in a circular way, so that all N subcarriers have been at least once processed after a predefined number of training sequences. This first embodiment supposes that the optical transmitter 101 transmits the training sequence via the N subcarriers or that the optical transmitter 101 and the optical receiver 102 switch synchronously from one subset of Na subcarriers to another.

According to a second embodiment, when dual-polarisation is implemented for transmitting optical signals from the optical transmitter 101 to the optical receiver 102, the optical receiver 102 dynamically defines the subset of Na subcarriers among the N subcarriers, as a function of variations of partial derivatives, with respect to wavelength, of the coefficients of the inverse matrix $H^{-1}$, as detailed hereafter with regard to Figs. 4 and 5. The same principle applies for when mono-polarisation is implemented for transmitting optical signals from the optical transmitter 101 to the optical receiver 102, the optical receiver 102 dynamically defines the subset of Na subcarriers among the N subcarriers, as a function of variations of a partial derivative, with respect to wavelength, of a scalar representative of the transmission channel. For this second embodiment, the optical transmitter 101 may transmit the training sequence only via the subset of Na subcarriers or via the N subcarriers. In case the optical transmitter 101 is expected to transmit the training sequence only via the subset of Na subcarriers, a loopback link from the optical receiver 102 to the optical transmitter 101 shall be present, in order for the optical receiver 102 to inform the optical transmitter 101 of the subset of Na subcarriers to be used.

In a following step S302, the optical receiver 102 receives a training sequence at least via the subset of Na subcarriers among the N subcarriers.

In a following step S303, the optical receiver 102 performs channel estimation on the basis of the training sequence received via the subset of Na subcarriers. In other words, the optical receiver 102 determines coefficients representative of the transmission channel between the optical transmitter 101 to the optical receiver 102 on the basis of the training sequence received via the subset of Na subcarriers.

When M = Na, the optical receiver 102 is able to process in parallel the training sequence received via the subset of Na subcarriers.

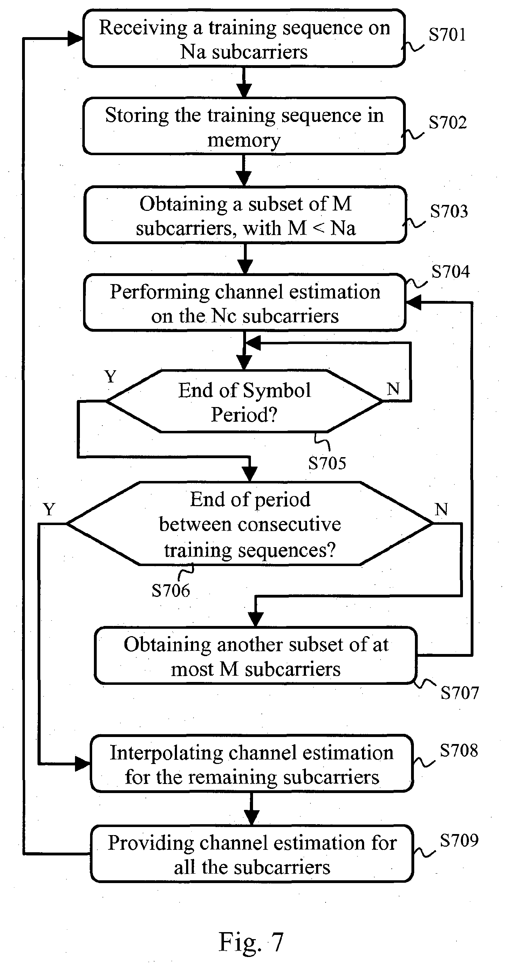

When M < Na, the optical receiver 102 is not able to process in parallel the training sequence received via the subset of Na subcarriers. However, as the transmission channel relies on a use of optical fibre between the optical transmitter 101 and the optical receiver 102, the transmission channel is not so frequency-selective as it would be on copper or over the air, and/or when the frequency-selective property of the transmission channel varies slowly as OFDM symbols get through. It means that the optical receiver 102 may sequentially process subcarriers for channel estimation. It allows reducing even further the required complexity of the optical receiver 102, *i.e.* the amount of processing resource simultaneously used at a given instant, by distributing the processing over the time, although it may induce more processing latency at the initial set-up. This aspect is detailed hereafter with regard to Fig. 7.

In a following step S304, the optical receiver 102 interpolates coefficients representative of the transmission channel between the optical transmitter 101 to the optical receiver 102 for the remaining N-Na subcarriers that were not processed in the step S303. This interpolation is performed on the basis of the channel estimation performed for the subset of Na subcarriers in the step S303, which corresponds to an interpolation in the frequency domain. In a variant, the optical receiver 102 performs, in replacement or in conjunction, an interpolation in the time domain. The optical receiver 102 then takes into account values of the coefficients obtained during preceding executions of the steps S303 and S304. For instance, the optical receiver 102 applies a linear regression.

The coefficients obtained in the steps S303 et S304, *i.e.* the resulting inverse matrix $H^{-1}$ when dual-polarisation is implemented for the optical communication from the optical transmitter 101 to the optical receiver 102, are then used for performing equalization.

When the subset of Na subcarriers is statically defined, the step S302 is repeated; otherwise, a step S305 is performed.

In the step S305, the optical receiver 102 determines whether selecting another subset of Na subcarriers among the N subcarriers is appropriate.

When the Na subcarriers are dynamically selected in a circular way, the optical receiver 102 determines that it is appropriate to select the next subset of Na subcarriers in sequence. It allows therefore performing channel estimation on the basis of all N subcarriers, after at most *floor-[N/Na] + 1*, or *N/Na* if Na is a submultiple of N, transmissions of training sequences.

The case where the Na subcarriers are dynamically selected as a function of variations of a partial derivative with respect to wavelength is detailed hereafter with regard to Figs. 4 and 5. It allows adapting the density of the subcarriers in the subset of Na subcarriers to the variations of the frequency-selective character of the transmission channel.

Once the step S305 has been performed, the step S302 is repeated.

**Fig. 4** schematically represents the partial derivative, with respect to wavelength, of a scalar representative of the transmission channel as a function of wavelength.

In case of mono-polarization, the curve represented in Fig. 4 represents the variations of a partial derivative, with respect to wavelength, of a scalar representative of the transmission channel, as a function of wavelength.

In case of dual-polarization, the curve represented in Fig. 4 represents the variations of an Euclidian distance of partial derivatives, with respect to wavelength, of the coefficients of the inverse matrix $H^{-1}$, as a function of wavelength. For the sake of simplicity, Fig. 4 indicates in ordinate $\partial H^{-1}/\partial\lambda$.

Although the curve is represented as a continuous line for readability considerations, it shall be understood that what matters is a discrete version of this curve according to the wavelengths of the N subcarriers.

The absolute variation $\Delta Y$ of the partial derivative $\partial H^{-1}/\partial\lambda$ may be expressed as follows:

$$\Delta Y = \sum_{i=1}^{N-1} |\Delta y_i|$$

wherein $\Delta y_i$ represents the variation from one wavelength corresponding to one subcarrier among the N subcarriers to the immediately greater wavelength corresponding to another subcarrier among the N subcarriers.

The purpose of the algorithm described hereafter with regard to Fig. 5 is to allow determining values $\Delta x_i$ corresponding to the distance between the successive wavelengths of the Na subcarriers.

**Fig. 5** schematically represents an algorithm performed by the optical receiver 102 for determining the subset of Na subcarriers among the N subcarriers.

In a step S501, the optical receiver 102 obtains an initial subset of Na subcarriers among the N subcarriers.

In a following step S502, the optical receiver 102 determines the partial derivative $\partial H^{-1}/\partial\lambda$, as described hereinbefore with regard to Fig. 4. This is performed thanks to the channel estimation on the initial subset of Na subcarriers and to interpolation of the remaining subcarriers among the N subcarriers, in order to approximate the matrix H and therefore deduce the inverse matrix $H^{-1}$.

The optical receiver 102 may reiterate the steps S501 and S502, for instance using the circular approach described hereinbefore, in order to refine the values of the partial derivative $\partial H^{-1}/\partial\lambda$.

In a following step S503, the optical receiver 102 determines the absolute variation $\Delta Y$ of the partial derivative $\partial H^{-1}/\partial\lambda$.

In a following step S504, the optical receiver 102 determines the subset of Na subcarriers by determining the values $\Delta x_i$ thanks to the following formula:

$$\Delta x_i = \frac{\Delta Y}{Na \left| \frac{\partial H^{-1}}{\partial\lambda}(i) \right|}$$

The optical receiver 102 selects the subcarriers among the N subcarriers for which the wavelengths match or are the closest to the values $\Delta x_i$ for forming the subset of Na subcarriers.

It has to be noted that the execution of the steps S502 to S504 is not necessarily performed each time a training sequence is received for a given polarisation. This allows distributing processing over time and hence reducing the amount of processing resources simultaneously in use.

According to a particular embodiment, the optical receiver 102 determines the subset of Na subcarriers by further taking into account a time-fair queuing constraint on the N subcarriers. Therefore, when, after a predefined amount of time, at least one subcarrier among the N subcarriers has not undergone channel estimation, the optical receiver includes said at least one subcarrier in the subset of Na subcarriers.

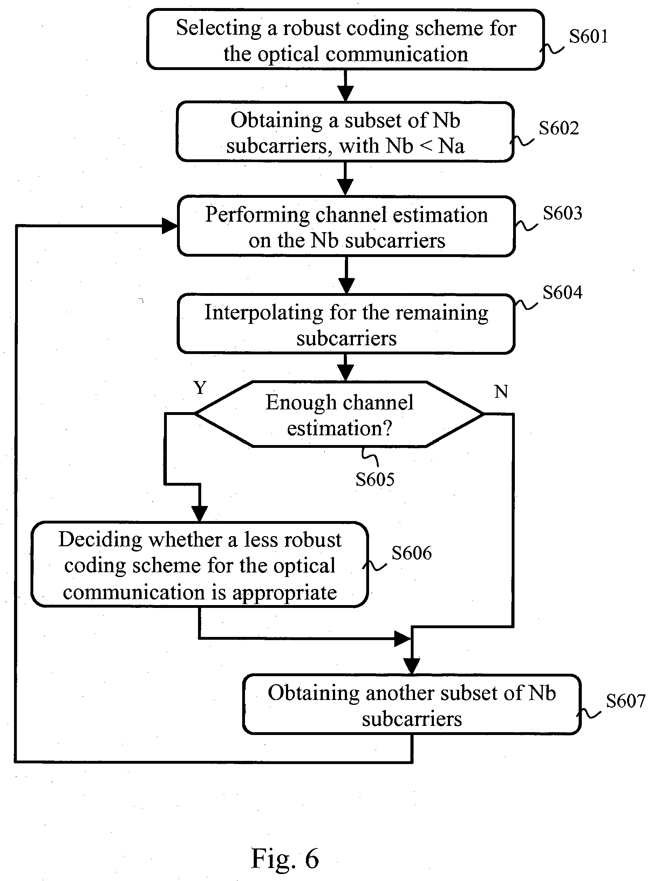

**Fig. 6** schematically represents an algorithm performed by the optical receiver 102 for configuring the optical transmitter 101 in one embodiment. In this embodiment, a loopback link from the optical receiver 102 to the optical transmitter 101 shall be present.

In a step S601, the optical transmitter 101 and the optical receiver 102 select a robust coding scheme for the optical communication. For instance, BPSK (Binary Phase-Shift Keying) coding is used. Such an initial configuration may be stored in a memory of the optical transmitter 101 and of the optical receiver 102 during manufacturing process.

In a following step S602, the optical receiver 102 obtains a subset of Nb subcarriers among the subset of Na subcarriers.

In a following step S603, the optical receiver 102 performs channel estimation on the basis of the subset of Nb subcarriers. In other words, the optical receiver 102 determines coefficients representative of the transmission channel between the optical transmitter 101 to the optical receiver 102 on the basis of the training sequence received via the subset of Nb subcarriers among the subset of Na subcarriers.

In a following step S604, the optical receiver 102 interpolates coefficients representative of the transmission channel between the optical transmitter 101 to the optical receiver 102 for the remaining Na-Nb subcarriers, among the subset of Na subcarriers, not processed in the step S603. This interpolation is performed on the basis of the channel estimation performed for the subset of Nb subcarriers in the step S603, *i.e.* in the frequency domain, but may be also performed in the time domain, as already mentioned. The optical receiver 102 performs this interpolation in the same way as in the step S304 already described. The robust coding scheme selected in the step S601 should enable the optical receiver 102 decoding the received signals, when an uncertainty in the values of the coefficients used for equalization is high, *i.e.* when a confidence level in said values is low, for instance when a ratio between a quantity of subcarriers to which interpolation is applied and a quantity of subcarriers to which channel estimation is applied is above a given threshold.

In a following step S605, the optical receiver 102 checks whether enough channel estimation has been performed to relax the constraints on the coding scheme. For instance, the optical receiver determines whether channel estimation has been performed for all Na subcarriers or a predefined portion of the Na subcarriers. If enough channel estimation has been performed, a step S606 is performed; otherwise, a step S607 is performed.

In the step S606, the optical receiver 102 decides whether a less robust coding scheme is appropriate for the optical communication and configures the optical transmitter 101 accordingly via the loopback link, if necessary. For instance, if the initial coding scheme obtained in the step S601 is still in use, the optical receiver 102 decides switching to a less robust coding scheme in order to be able to increase the bitrate of useful data transmitted from the optical transmitter 101 to the optical receiver 102. For instance, 16-QAM (Quadrature Amplitude Modulation) coding scheme is used instead of BPSK coding scheme. The optical receiver 102 may hence decide gradually decreasing the robustness of the coding scheme, and thus increasing the useful bandwidth, by switching from one coding scheme to another, e.g. BPSK to QPSK to 16-QAM. Then the step S607 is performed.

Therefore, in one embodiment, the optical receiver 102 applies a more robust coding scheme until a predefined quantity of subcarriers has been concerned by channel estimation.

In the step S607, the optical receiver 102 obtains another subset of Nb subcarriers among the Na subcarriers, and the step S603 is repeated.

In a variant, the optical receiver 102 configures the optical transmitter 101 so that a less robust coding scheme is applied only for each subcarrier on which channel estimation has been performed. For instance, BPSK coding scheme is used on subcarriers on which interpolation has been performed, and 16-QAM coding scheme is used on subcarriers on which channel estimation has effectively been performed.

In yet another variant, the optical receiver 102 configures the optical transmitter 101 so that the same signal is transmitted, on both polarisation, on any subcarrier on which interpolation has been performed, and for which a confidence level in said interpolation is below a given threshold.

**Fig. 7** schematically represents a second algorithm performed by the optical receiver 102 for performing channel estimation, especially in the case where M < Na, *i.e.* when the optical receiver is able to process a quantity of subcarriers lower than the cardinality of the subset of Na subcarriers. This algorithm can be implemented alternatively or in conjunction with any embodiment described hereinbefore with regard to Fig. 6.

In the step S701, the optical receiver 102 receives a training sequence via the subset of Na subcarriers.

In a following step S702, the optical receiver 102 stores in memory the received training sequence for the Na subcarriers.

As already mentioned, the optical transmitter 101 transmits the training sequence over time, for instance on a regular basis, a predefined number of symbols therefore separating two consecutive transmissions of training sequences for a given polarisation. As the frequency-selective character of the dual-polarization transmission channel between the optical transmitter 101 and the optical receiver 102 varies slowly compared to OFDM symbol duration, the optical receiver 102 can take benefit of the time period between said two consecutive transmissions of training sequences for processing the stored training sequence.

In a following step S703, the optical receiver 102 obtains an initial subset of at most M subcarriers among the Na subcarriers. In other words, the cardinality of said initial subset is at most equal to the quantity of subcarriers that the optical receiver 102 is able to process in parallel.

In a following step S704, the optical receiver 102 performs channel estimation on the basis of the subset of M subcarriers. In other words, the optical receiver 102 determines coefficients representative of the transmission channel between the optical transmitter 101 to the optical receiver 102 on the basis of the training sequence received via the subset of M subcarriers among the subset of Na subcarriers.

In a following step S705, the optical receiver 102 checks whether a symbol period has ended since the beginning of the execution of the step S704. If the symbol period has ended, a step S706 is performed; otherwise, the step S705 is repeated until such a symbol period has ended.

In the step S706, the optical receiver 102 checks whether the period between two consecutive transmissions of training sequences on a given polarisation has ended. If the period between two consecutive transmissions of training sequences has ended, a step S708 is performed; otherwise, a step S707 is performed.

In the step S707, the optical receiver 102 obtains another subset of at most M subcarriers among the Na subcarriers. The optical receiver 102 selects the subcarriers in a circular way, so that, at the end of the period between two consecutive transmissions of training sequences on a given polarisation, all Na subcarriers have been processed for channel estimation. Then the step S704 is repeated.

In the step S708, the optical receiver 102 interpolates coefficients representative of the transmission channel between the optical transmitter 101 to the optical receiver 102 for the remaining N-Na subcarriers, among the subset of Na subcarriers, not processed in the step S603. In a following step S709, the optical receiver 102 provides the inverse matrix $H^{-1}$ for performing equalization, and then the step S701 is repeated.

As already mentioned, training sequences are transmitted on a regular basis, for instance every fifty symbols. In the approach where the subset of Na subcarriers is processed in parallel for channel estimation, it means that coefficients are available for each subcarrier every fifty symbols. With the partially sequential approach described hereinbefore with regard to Fig. 7, this frequency is maintained, except that during an initial phase it exists some subcarriers on which neither channel estimation nor interpolation has yet been performed.

In a variant, with regard to the partially sequential approach described hereinbefore with regard to Fig. 7, the optical receiver 102 configures the optical transmitter 101 so that the same signal is transmitted, on both polarisation, on any subcarrier on which neither channel estimation nor interpolation has yet been performed, and the optical receiver 102 uses the signal received via both polarisation for performing signal decoding.

## Claims

1. An optical receiver (102) adapted for receiving via a transmission channel an orthogonal frequency-division multiplex optical signal via a plurality of subcarriers, the optical receiver comprising means (150) for performing channel estimation and means for performing equalization (126) on the basis of coefficients representative of the transmission channel, said coefficients being provided by said means for performing channel estimation,
   **characterized in that** said means for performing channel estimation comprise:

   - means (151, 152, 153) for processing a training sequence received via a first subset among said plurality of subcarriers; and
   - means (160) for interpolating coefficients to obtain interpolated coefficients, the interpolated coefficients corresponding to subcarriers not processed by said means for processing the training sequence.

2. The optical receiver according to claim 1, **characterized in that** said means for processing the training sequence are adapted to process in parallel the subcarriers of said first subset.

3. The optical receiver according to claim 1, **characterized in that** said means for processing the training sequence are adapted to process in parallel a quantity of subcarriers lower than the cardinality of said first subset and **in that** said means for performing channel estimation comprise:

   - means for determining a second subset of subcarriers among said first subset of subcarriers, the cardinality of said second subset being at most equal to the quantity of subcarriers that said means for processing the training sequence are adapted to process in parallel;
   - means for processing the training sequence received via said second subset;
   - means for selecting, in a circular way, at least one other second subset of subcarriers among said first subset and for repeating processing the training sequence with said at least one other second subset.

4. The optical receiver according to claim 3, **characterized in that**, said optical signal being a dual-polarisation optical signal, the optical receiver comprises means for configuring an optical transmitter (101) adapted to transmit said dual-polarisation optical signal so that the optical transmitter transmits the same signal, on both polarisations, on subcarriers for which said coefficients have not been interpolated and for which said training sequence has not been processed.

5. The optical receiver according to any one of claims 1 to 4, **characterized in that** the optical receiver is adapted to receive training sequences over time and **in that** said means for performing channel estimation further comprise means for selecting (S305), from one training sequence to another, another first subset among said plurality of subcarriers.

6. The optical receiver according to claim 5, **characterized in that** said optical receiver is adapted so that after a predefined quantity of received training sequences, said means for processing the training sequence have processed all subcarriers among said plurality of subcarriers.

7. The optical receiver according to any one of claims 1 to 4, **characterized in that**, said optical signal being a mono-polarisation optical signal, said means for performing channel estimation comprise means for determining (S504) said first subset on the basis of a partial derivative, with respect to wavelength, of an inverse of a scalar representative of the transmission channel.

8. The optical receiver according to any one of claims 1 to 4, **characterized in that**, said optical signal being a dual-polarisation optical signal, said means for performing channel estimation comprise means for determining said first subset on the basis of an Euclidian distance between partial derivatives, with respect to wavelength, of coefficients of an inverse of a matrix representative of the transmission channel.

9. The optical receiver according to any one of claims 7 and 8, **characterized in that** said means for determining said first subset are further adapted to take into account a time-fair queuing constraint on all subcarriers of said plurality.

10. The optical receiver according to any one of claims 1 to 9, **characterized in that** the optical receiver comprises means for configuring an optical transmitter adapted to transmit said optical signal so that the optical transmitter applies a coding scheme more robust for subcarriers for which said coefficients have been interpolated than for subcarriers processed by said means for processing the training sequence.

11. The optical receiver according to any one of claims 1 to 9, **characterized in that** the optical receiver comprises means for configuring an optical transmitter adapted to transmit said optical signal so that the optical transmitter applies a more robust coding scheme until a predefined quantity of subcarriers has been processed by said means for processing the training sequence.

12. The optical receiver according to any one of claims 1 to 9, **characterized in that**, said optical signal being a dual-polarisation optical signal, the optical receiver comprises means for configuring an optical transmitter adapted to transmit said dual-polarisation optical signal so that the optical transmitter transmits the same signal, on both polarisations, on subcarriers for which said coefficients have been interpolated and for which a confidence level in the interpolated coefficients is below a given threshold.

13. A method performed by an optical receiver (102), comprising:

- receiving via a transmission channel an orthogonal frequency-division multiplex optical signal via a plurality of subcarriers;
- performing (S303) channel estimation;
- performing equalization on the basis of coefficients representative of the transmission channel, said coefficients resulting from said channel estimation;
**characterized in that** performing channel estimation comprises:
- processing (S302) a training sequence received via a first subset among said plurality of subcarriers; and
- interpolating (S304) coefficients to obtain interpolated coefficients, the interpolated coefficients corresponding to subcarriers not processed during the step of processing the training sequence.

14. An optical transmitter (101) adapted for transmitting via a transmission channel an orthogonal frequency-division multiplex optical signal via a plurality of subcarriers, **characterized in that** the optical transmitter is further adapted for transmitting, during a symbol period, a training sequence on a subset of said plurality of subcarriers and data on the remaining subcarriers among said plurality of subcarriers.

15. A method performed by an optical transmitter (101), comprising:

- transmitting via a transmission channel an orthogonal frequency-division multiplex optical signal via a plurality of subcarriers,
**characterized in that** the method further comprises:
- transmitting, during a symbol period, a training sequence on a subset of said plurality of subcarriers and data on the remaining subcarriers among said plurality of subcarriers.

**Patentansprüche**

1. Optischer Empfänger (102), der zum Empfangen eines optischen Signals des orthogonalen Frequenzmultiplexverfahrens über einen Sendekanal über eine Vielzahl von Hilfsträgern geeignet ist, wobei der optische Empfänger eine Einrichtung (150) zum Durchführen einer Kanalschätzung und eine Einrichtung zum Durchführen einer Entzerrung (126) auf der Basis von Koeffizienten, die den Sendekanal darstellen, wobei die Koeffizienten durch die Einrichtung zum Durchführen einer Kanalschätzung zur Verfügung gestellt werden, aufweist,
   **dadurch gekennzeichnet, dass** die Einrichtung zum Durchführen einer Kanalschätzung folgendes aufweist:

   - eine Einrichtung (151, 152, 153) zum Verarbeiten einer über eine erste Untergruppe unter der Vielzahl von Hilfsträgern empfangenen Trainingssequenz; und
   - eine Einrichtung (160) zum Interpolieren von Koeffizienten, um interpolierte Koeffizienten zu erhalten, wobei die interpolierten Koeffizienten durch die Einrichtung zum Verarbeiten der Trainingssequenz nicht verarbeiteten Hilfsträgern entsprechen.

2. Optischer Empfänger nach Anspruch 1, **dadurch gekennzeichnet, dass** die Einrichtung zum Verarbeiten der Trainingssequenz dazu geeignet ist, die Hilfsträger der ersten Untergruppe parallel zu verarbeiten.

3. Optischer Empfänger nach Anspruch 1, **dadurch gekennzeichnet, dass** die Einrichtung zum Verarbeiten der Trainingssequenz dazu geeignet ist, eine Anzahl von Hilfsträgern zu parallel zu verarbeiten, die niedriger als die Kardinalität der ersten Untergruppe ist, und dass die Einrichtung zum Durchführen einer Kanalschätzung folgendes aufweist:

   - eine Einrichtung zum Bestimmen einer zweiten Untergruppe von Hilfsträgern unter der ersten Untergruppe von Hilfsträgern, wobei die Kardinalität der zweiten Untergruppe höchstens gleich der Anzahl von Hilfsträgern ist, für welche die Einrichtung zum Verarbeiten der Trainingssequenz für eine parallele Verarbeitung geeignet ist;
   - eine Einrichtung zum Verarbeiten der über die zweite Untergruppe empfangenen Trainingssequenz;
   - eine Einrichtung zum Auswählen wenigstens einer anderen zweiten Untergruppe von Hilfsträgern unter der ersten Untergruppe auf eine periodische Weise und zum Wiederholen einer Verarbeitung der Trainingssequenz mit der wenigstens einen anderen zweiten Untergruppe.

4. Optischer Empfänger nach Anspruch 3, **dadurch gekennzeichnet, dass**, während das optische Signal ein optisches Signal einer Dualpolarisation ist, der optische Empfänger eine Einrichtung zum Konfigurieren eines optischen Senders (101) aufweist, der dazu geeignet ist, das optische Signal einer Dualpolarisation so zu senden, dass der optische Sender dasselbe Signal bei beiden Polarisationen auf Hilfsträgern sendet, für welche die Koeffizienten nicht interpoliert worden sind und für welche die Trainingssequenz nicht verarbeitet worden ist.

5. Optischer Empfänger nach einem der Ansprüche 1 bis 4, **dadurch gekennzeichnet, dass** der optische Empfänger dazu geeignet ist, Trainingssequenzen im Zeitablauf zu empfangen, und dass die Einrichtung zum Durchführen einer Kanalschätzung weiterhin eine Einrichtung zum Auswählen (S305) einer weiteren ersten Untergruppe unter der Vielzahl von Hilfsträgeren von einer Trainingssequenz zu einer weiteren aufweist.

6. Optischer Empfänger nach Anspruch 5, **dadurch gekennzeichnet, dass** der optische Empfänger dazu geeignet ist, so dass die Einrichtung zum Verarbeiten der Trainingssequenzen nach einer vordefinierten Anzahl von empfangenen Trainingssequenzen alle Hilfsträger unter der Vielzahl von Hilfsträgern verarbeitet hat.

7. Optischer Empfänger nach einem der Ansprüche 1 bis 4, **dadurch gekennzeichnet, dass**, während das optische Signal ein optisches Signal einer Monopolarisation ist, die Einrichtung zum Durchführen einer Kanalschätzung eine Einrichtung zum Bestimmen (S504) der ersten Untergruppe auf der Basis einer partiellen Ableitung eines Inversen einer skalaren Darstellung des Sendekanals in Bezug auf die Wellenlänge aufweist.

8. Optischer Empfänger nach einem der Ansprüche 1 bis 4, **dadurch gekennzeichnet, dass**, während das optische Signal ein optisches Signal einer Dualpolarisation ist, die Einrichtung zum Durchführen einer Kanalschätzung eine Einrichtung zum Bestimmen der ersten Untergruppe auf der Basis eines euklidischen Abstands zwischen partiellen Ableitungen von Koeffizienten eines Inversen einer Matrix, die den Sendekanal darstellt, in Bezug auf die Wellenlänge aufweist.

**9.** Optischer Empfänger nach einem der Ansprüche 7 und 8, **dadurch gekennzeichnet, dass** die Einrichtung zum Bestimmen der ersten Untergruppe weiterhin dazu geeignet ist, eine zeitgerechte Warteschlangenbildungsbeschränkung an allen Hilfsträgern der Vielzahl zu berücksichtigen.

**10.** Optischer Empfänger nach einem der Ansprüche 1 bis 9, **dadurch gekennzeichnet, dass** der optische Empfänger eine Einrichtung zum Konfigurieren eines optischen Senders aufweist, der dazu geeignet ist, das optische Signal so zu senden, dass der optische Sender ein Codierschema anwendet, das für Hilfsträger, für welche die Koeffizienten inter-poliert worden sind, robuster als für Hilfsträger ist, die durch die Einrichtung zum Verarbeiten der Trainingssequenz verarbeitet sind.

**11.** Optischer Empfänger nach einem der Ansprüche 1 bis 9, **dadurch gekennzeichnet, dass** der optische Empfänger eine Einrichtung zum Konfigurieren eines optischen Senders aufweist, der dazu geeignet ist, das optische Signal so zu senden, dass der optische Sender ein robusteres Codierschema anwendet, bis eine vordefinierte Anzahl von Hilfsträgern durch die Einrichtung zum Verarbeiten der Trainingssequenz verarbeitet worden ist.

**12.** Optischer Empfänger nach einem der Ansprüche 1 bis 9, **dadurch gekennzeichnet, dass**, während das optische Signal ein optisches Signal einer Dualpolarisation ist, der optische Empfänger eine Einrichtung zum Konfigurieren eines optischen Senders aufweist, der dazu geeignet ist, das optische Signal einer Dualpolarisation so zu senden, dass der optische Sender dasselbe Signal bei beiden Polarisationen auf Hilfsträgern sendet, für welche die Koeffizienten interpoliert worden sind und für welche ein Vertrauenslevel in Bezug auf die interpolierten Koeffizienten unter einer gegebenen Schwelle ist.

**13.** Verfahren, durchgeführt durch einen optischen Empfänger (102), das folgendes aufweist:

- Empfangen eines optischen Signals des orthogonalen Frequenzmultiplexverfahrens über einen Sendekanal über eine Vielzahl von Hilfsträgern;
- Durchführen (S303) einer Kanalschätzung;
- Durchführen einer Entzerrung auf der Basis von Koeffizienten, die den Sendekanal darstellen, wobei die Koeffizienten aus der Kanalschätzung resultieren;
**dadurch gekennzeichnet, dass** ein Durchführen einer Kanalschätzung folgendes aufweist:
- Verarbeiten (S302) einer über eine erste Untergruppe unter der Vielzahl von Hilfsträgern empfangenen Trainingssequenz; und
- Interpolieren (S304) von Koeffizienten, um interpolierte Koeffizienten zu erhalten, wobei die interpolierten Koeffizienten während des Schritts zum Verarbeiten der Trainingssequenz nicht verarbeiteten Hilfsträgern entsprechen.

**14.** Optischer Sender (101), der zum Senden eines optischen Signals des orthogonalen Frequenzmultiplexverfahrens über einen Sendekanal über eine Vielzahl von Hilfsträgern geeignet ist, **dadurch gekennzeichnet, dass** der optische Sender weiterhin zum Senden einer Trainingssequenz auf einer Untergruppe der Vielzahl von Hilfsträgern und von Daten auf den übrigen Hilfsträgern unter der Vielzahl von Hilfsträgern während einer Symbolperiode geeignet ist.

**15.** Verfahren, durchgeführt durch einen optischen Sender (101), das folgendes aufweist:

- Senden eines optischen Signals des orthogonalen Frequenzmultiplexverfahrens über einen Sendekanal über eine Vielzahl von Hilfsträgern;
**dadurch gekennzeichnet, dass** das Verfahren weiterhin folgendes aufweist:
- Senden einer Trainingssequenz auf einer Untergruppe der Vielzahl von Hilfsträgern und von Daten auf den übrigen Hilfsträgern unter der Vielzahl von Hilfsträgern während einer Symbolperiode.

**Revendications**

**1.** Récepteur optique (102) adapté pour recevoir via un canal de transmission un signal optique à multiplexage orthogonal par répartition en fréquence via une pluralité de sous-porteuses, le récepteur optique comprenant des moyens (150) pour effectuer une estimation de canal et des moyens pour effectuer une égalisation (126) sur la base de coefficients représentatifs du canal de transmission, lesdits coefficients étant fournis par lesdits moyens pour effectuer l'estimation de canal,
**caractérisé en ce que** lesdits moyens pour effectuer l'estimation de canal comprennent:

- des moyens (151, 152, 153) pour traiter une séquence d'apprentissage reçue via un premier sous-ensemble parmi ladite pluralité de sous-porteuses; et
- des moyens (160) pour interpoler des coefficients pour obtenir des coefficients interpolés, les coefficients interpolés correspondant à des sous-porteuses non traitées par lesdits moyens pour traiter la séquence d'apprentissage.

2. Récepteur optique selon la revendication 1, **caractérisé en ce que** lesdits moyens pour traiter la séquence d'apprentissage sont adaptés pour traiter en parallèle les sous-porteuses dudit premier sous-ensemble.

3. Récepteur optique selon la revendication 1, **caractérisé en ce que** lesdits moyens pour traiter la séquence d'apprentissage sont adaptés pour traiter en parallèle une quantité de sous-porteuses inférieure à la cardinalité dudit premier sous-ensemble et **en ce que** lesdits moyens pour effectuer l'estimation de canal comprennent :

- des moyens pour déterminer un second sous-ensemble de sous-porteuses parmi ledit premier sous-ensemble de sous-porteuses, la cardinalité dudit second sous-ensemble étant au plus égale à la quantité de sous-porteuses que lesdits moyens pour traiter la séquence d'apprentissage sont adaptés à traiter en parallèle ;
- des moyens pour traiter la séquence d'apprentissage reçue via ledit second sous-ensemble ;
- des moyens pour sélectionner, de manière circulaire, au moins un autre second sous-ensemble de sous-porteuses parmi ledit premier sous-ensemble et pour répéter le traitement de la séquence d'apprentissage avec ledit au moins un autre second sous-ensemble.

4. Récepteur optique selon la revendication 3, **caractérisé en ce que**, ledit signal optique étant un signal optique à double-polarisation, le récepteur optique comprend des moyens pour configurer un transmetteur optique (110) adapté pour transmettre ledit signal optique à double-polarisation de sorte que le transmetteur optique transmet le même signal, sur les deux polarisations, sur des sous-porteuses pour lesquelles lesdits coefficients n'ont pas été interpolés et pour lesquels ladite séquence d'apprentissage n'a pas été traitée.

5. Récepteur optique selon l'une quelconque des revendications 1 à 4, **caractérisé en ce que** le récepteur optique est adapté pour recevoir des séquences d'apprentissage au fil du temps et **en ce que** lesdits moyens pour effectuer l'estimation de canal comprennent en outre des moyens pour sélectionner (S305), d'une séquence d'apprentissage à l'autre, un autre premier sous-ensemble parmi ladite pluralité de sous-porteuses.

6. Récepteur optique selon la revendication 5, **caractérisé en ce que** ledit récepteur optique est adapté de telle sorte que, après une quantité prédéfinie de séquences d'apprentissage reçues, lesdits moyens pour traiter la séquence d'apprentissage ont traité toutes les sous-porteuses parmi ladite pluralité de sous-porteuses.

7. Récepteur optique selon l'une quelconque des revendications 1 à 4, **caractérisé en ce que**, ledit signal optique étant un signal optique à polarisation unique, lesdits moyens pour effectuer l'estimation de canal comprennent des moyens pour déterminer (S504) ledit premier sous-ensemble sur la base d'une dérivée partielle, par rapport à la longueur d'onde, d'un inverse d'un scalaire représentatif du canal de transmission.

8. Récepteur optique selon l'une quelconque des revendications 1 à 4, **caractérisé en ce que**, ledit signal optique étant un signal optique à double-polarisation, lesdits moyens pour effectuer l'estimation de canal comprennent des moyens pour déterminer ledit premier sous-ensemble sur la base d'une distance Euclidienne entre des dérivées partielles, par rapport à la longueur d'onde, de coefficients d'un inverse d'une matrice représentative du canal de transmission.

9. Récepteur optique selon l'une quelconque des revendications 7 et 8, **caractérisé en ce que** lesdits moyens pour déterminer ledit premier sous-ensemble sont en outre adaptés pour prendre en compte une contrainte d'équité temporelle sur toutes les sous-porteuses de ladite pluralité.

10. Récepteur optique selon l'une quelconque des revendications 1 à 9, **caractérisé en ce que** le récepteur optique comprend des moyens pour configurer un transmetteur optique adapté pour transmettre ledit signal optique de telle sorte que le transmetteur optique applique un schéma de codage plus robuste pour des sous-porteuses pour lesquelles lesdits coefficients ont été interpolés que pour des sous-porteuses traitées par lesdits moyens pour traiter ladite séquence d'apprentissage.

11. Récepteur optique selon l'une quelconque des revendications 1 à 9, **caractérisé en ce que** le récepteur optique comprend des moyens pour configurer un transmetteur optique adapté pour transmettre ledit signal optique de telle sorte que le transmetteur optique applique un schéma de codage plus robuste jusqu'à ce qu'une quantité prédéfinie de sous-porteuses a été traitée par lesdits moyens pour traiter la séquence d'apprentissage.

12. Récepteur optique selon l'une quelconque des revendications 1 à 9, **caractérisé en ce que**, ledit signal optique étant un signal optique à double-polarisation, le récepteur optique comprend des moyens pour configurer un transmetteur optique adapté pour transmettre ledit signal optique à double-polarisation de telle sorte que le transmetteur optique transmet le même signal, sur les deux polarisations, sur des sous-porteuses pour lesquelles lesdits coefficients ont été interpolés et pour lesquelles un niveau de confiance dans les coefficients interpolés est en dessous un seuil donné.

13. Procédé effectué par un récepteur optique (102), comprenant :

    - recevoir via un canal de transmission un signal optique à multiplexage orthogonal par répartition en fréquence via une pluralité de sous-porteuses ;
    - effectuer (S303) une estimation de canal ;
    - effectuer une égalisation sur la base de coefficients représentatifs du canal de transmission, lesdits coefficients résultant de ladite estimation de canal ;
    **caractérisé en ce qu'**effectuer l'estimation de canal comprend:
    - traiter (S302) une séquence d'apprentissage reçue via un premier sous-ensemble parmi ladite pluralité de sous-porteuses; et
    - interpoler (S304) des coefficients pour obtenir des coefficients interpolés, les coefficients interpolés correspondant à des sous-porteuses non traitées pendant l'étape de traitement de la séquence d'apprentissage.

14. Transmetteur optique (101) adapté pour transmettre via un canal de transmission un signal optique à multiplexage orthogonal par répartition en fréquence via une pluralité de sous-porteuses, **caractérisé en ce que** le transmetteur optique est en outre adapté pour transmettre, pendant une période symbole, une séquence d'apprentissage sur un sous-ensemble de ladite pluralité de sous-porteuses et des données sur les sous-porteuses restantes parmi ladite pluralité de sous-porteuses.

15. Procédé effectué par un transmetteur optique (101), comprenant :

    - transmettre via un canal de transmission un signal optique à multiplexage orthogonal par répartition en fréquence via une pluralité de sous-porteuses ;
    **caractérisé en ce que** le procédé comprend en outre :
    - transmettre, pendant une période symbole, une séquence d'apprentissage sur un sous-ensemble de ladite pluralité de sous-porteuses et des données sur les sous-porteuses restantes parmi ladite pluralité de sous-porteuses.

Fig. 1

| | | |
|---|---|---|
| <u>200</u><br>CPU | <u>201</u><br>RAM | <u>202</u><br>ROM |

<u>203</u>

<u>204</u>

210

## Fig. 2

Obtaining a subset of Na
subcarriers — S301

Receiving a training sequence — S302

Performing channel estimation
on the Na subcarriers — S303

Interpolating for the remaining
subcarriers — S304

Determining whether another subset of
Na subcarriers is appropriate — S305

## Fig. 3

$$\frac{\partial H^{-1}}{\partial \lambda}$$

$\Delta y$

$\Delta x_i$

$\lambda$

Fig. 4

Obtaining an initial set of Na
subcarriers — S501

Determining the partial
derivative of $H^{-1}$ — S502

Determining the absolute variation of the
partial derivative of $H^{-1}$ — S503

Determining a new subset of Na
subcarriers — S504

Fig. 5

Selecting a robust coding scheme for
the optical communication ⟍ S601

↓

Obtaining a subset of Nb
subcarriers, with Nb < Na ⟍ S602

↓

Performing channel estimation
on the Nb subcarriers ⟍ S603

↓

Interpolating for the remaining
subcarriers ⟍ S604

↓

Y  ⟨ Enough channel
estimation? ⟩  N
S605

↓

Deciding whether a less robust
coding scheme for the optical
communication is appropriate ⟍ S606

↓

Obtaining another subset of Nb
subcarriers ⟍ S607

Fig. 6

Receiving a training sequence on
Na subcarriers — S701

Storing the training sequence in
memory — S702

Obtaining a subset of M
subcarriers, with M < Na — S703

Performing channel estimation
on the Nc subcarriers — S704

Y — End of Symbol
Period? — N — S705

Y — End of period
between consecutive
training sequences? — N — S706

Obtaining another subset of at
most M subcarriers — S707

Interpolating channel estimation
for the remaining subcarriers — S708

Providing channel estimation for
all the subcarriers — S709

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009297144 A1

- WO 2010149714 A

**Non-patent literature cited in the description**

- **S.L. JANSEN et al.** Long-haul transmission of 16x52.5 Gbps polarization-division-multiplexed OFDM enabled b y MIMO processing. *J. Opt. Net-working,* 2008, vol. 7 (2), 173-181